# EUROPEAN PATENT APPLICATION

(11) **EP 1 724 984 A1**
(43) Date of publication of application: **22.11.2006**
(21) Application number: 05291096.5
(22) Date of filing: 20.05.2005
(51) Int. Cl.: H04L 29/06, H04L 12/28

(54) **A terminal comprising a transceiver**

(71) Applicant: ALCATEL, 75008 Paris (FR)
(72) Inventor: Trapeniers, Lieven Leopold Albertine, 2200 Herentals (Noorderwijk) (BE); Godon, Marc Bruna Frieda, 1840 Londerzeel (BE); Vanparijs, Frieda, 1880 Kapelle-op-den Bos (BE)
(74) Representative: Narmon, Gisèle Marie Thérèse

(57) **Abstract**

Terminals (1) comprising transceivers (2) for exchanging messages (8,18) with further transceivers (12) of further terminals (11) are provided with negotiation modules (5) for exchanging negotiation messages (33,34) with further negotiation modules (15) of the further terminals (11), to increase the flexibility. The negotiation messages (33,34) define proposal actions for activations and/or deactivations of terminal capabilities and proposal reactions to the proposal actions. As a result, it is no longer necessary that each terminal has the same entire application and that each terminal is treated the same way. Individual possibilities of different terminals are used and are allowed. Capability modules (4) exchange capability messages (31,32) with further capability modules (14) of the further terminals (11). The capability messages (31,32) define terminal capabilities such as human machine interfaces (7a-7d). Application modules (6) for exchanging application messages with further application modules (16) of the further terminals (11) define at least a part of an application. Application interface modules (6a-6d) for interfacing the application modules (6) are activatable and/or deactivatable in response to proposal reactions.

## Description

The invention relates to a terminal comprising a transceiver for exchanging messages with a further transceiver of a further terminal.

Examples of such a terminal are mobile phones and personal digital assistants and other terminals used wiredly and/or wirelessly.

A prior art terminal is known from USapp 2004/0154461, which discloses in its paragraphs 53-56 a number of mobile stations together forming one group of mobile stations for playing a spin-the-bottle game or a virtual volleyball game. For the spin-the-bottle game, the mobile stations are synchronized and located near to each other. A sound is used to illustrate a direction in which a bottleneck points. A control unit of one mobile station causes the sound to move in a specific or random order between the mobile stations, first at a fast rate, then at a gradually slowing rate until the sound is played by only one of the mobile stations.

For the virtual volleyball game, the mobile stations are operated by the players having player numbers corresponding with numbers on the keypad. The keypad is used to aim a shot towards one of the players by depressing this player's keypad number. Thereby, the ball is represented by a sound having a base pitch that represents an ideal moment to hit the ball. Horizontal ball movement may be represented by a volume change, and vertical ball movement may be represented by a pitch change. Another sound may be used to represent a player making contact with the virtual volleyball. The closer to the base pitch that the keypad is depressed for hitting the ball, the more force is used to hit the ball. If the sound goes below the base pitch before a player hits the virtual ball, the player has missed the ball.

The known terminal is disadvantageous, inter alia, owing to the fact that it is relatively inflexible. Each terminal comprises the same entire application, and each terminal is treated the same way. Individual possibilities of different terminals are not used and/or are not allowed.

It is an object of the invention, inter alia, to provide a terminal as defined above which is relatively flexible.

The terminal according to the invention is characterized in that the terminal comprises
- a negotiation module for exchanging negotiation messages with a further negotiation module of the further terminal, at least one negotiation message defining at least one proposal action for at least one activation/deactivation of at least one terminal capability in at least one terminal, and at least one further negotiation message defining at least one proposal reaction to the at least one proposal action.
   By introducing the negotiation module for exchanging negotiation messages, a terminal proposes an other terminal to activate/deactivate its own terminal capabilities and/or the terminal proposes the other terminal to let this other terminal activate/deactivate its terminal capabilities and/or the other terminal reacts to such a proposal. As a result, it is no longer necessary that each terminal has the same entire application and that each terminal is treated the same way. Individual possibilities of different terminals are used and are allowed. Such a terminal according to the invention is relatively flexible.
   The terminal according to the invention is further advantageous, inter alia, in that it offers more possibilities, compared to a prior art terminal.
   An embodiment of the terminal according to the invention is characterized in that the terminal comprises
- a capability module for exchanging capability messages with a further capability module of the further terminal, at least one capability message defining at least one terminal capability and at least one further capability message defining at least one further terminal capability.
   By introducing the capability modules for exchanging capability messages, the terminals inform each other of their capabilities. This can be done directly by for example exchanging terminal capability codes or indirectly by for example exchanging terminal identifiers which are linked to terminal capability codes etc. As a result, the terminals get an overview of each other's capabilities. This embodiment increases the efficiency of the negotiations.
   An embodiment of the terminal according to the invention is characterized in that the terminal comprises
- an application module for exchanging application messages with a further application module of the further terminal, the application module defining at least a part of at least one application and the further application module defining at least a further part of the at least one application.
   By introducing the application modules for exchanging application messages, at least a part of at least one application is run in the terminal and at least a further part of the at least one application is run in the further terminal. These parts may be different parts or partly identical parts or entirely identical parts of the same application.
   An embodiment of the terminal according to the invention is characterized in that the application module comprises
- an application interface module for interfacing the application module and at least one terminal capability defined by at least one human machine interface, the application interface module being activatable/deactivatable in response to at least one proposal reaction.
   By introducing the application interface module for interfacing the application module and at least one terminal capability, the application interface module is activated/deactivated, in other words (de)activated, in response to a proposal reaction. A terminal capability is defined by a human machine interface such as a microphone and its parameters, a loudspeaker and its parameters, a display and its parameters, a keypad and its parameters, a mouse and its parameters, a speech recognition module and its parameters, etc.
   An embodiment of the terminal according to the invention is characterized in that the application module comprises
- an application rule module for defining at least one rule for the application.
   Application rules for example define the boundaries for the application, such as a minimum number of terminals to be involved, a maximum number of terminals to be involved, a minimum number of terminal capabilities of a terminal, etc.
   An embodiment of the terminal according to the invention is the application module comprises
- an application role module for defining at least one role within the application.
   Application roles for example define parts of the application, such as the part of the application to be run in the terminal and the further part of the application to be run in the further terminal etc.
   An embodiment of the terminal according to the invention is characterized in that the messages are exchanged in a transparent way.
   By exchanging the messages in a transparent way, the messages are exchanged between the terminals via a wired or wireless link not comprising any intelligence with respect to the messages. A wired link for example comprises electrical wires or optical fibers, and a wireless link for example comprises an infrared link or a radio link such as GSM, GPRS, UMTS, BLUETOOTH, etc.
   An embodiment of the terminal according to the invention is characterized in that the messages are exchanged without the terminal being a master or a slave and without the further terminal being a master or a slave.
   By exchanging the messages without the terminals being masters and slaves but through negotiations, the relatively inflexible master and slave construction is avoided.
   In addition, the invention relates to a module for use in the terminal according to the invention as defined above.
   The invention also relates to a method for exchanging messages between a transceiver of a terminal and a further transceiver of a further terminal. The method according to the invention is characterized in that the method comprises the step of
- exchanging negotiation messages between a negotiation module and a further negotiation module of the further terminal, at least one negotiation message defining at least one proposal action for at least one activation/deactivation of at least one terminal capability in at least one terminal, and at least one further negotiation message defining at least one proposal reaction to the at least one proposal action.
   The invention yet also relates to a processor program product for exchanging messages between a transceiver of a terminal and a further transceiver of a further terminal. The processor program product according to the invention is characterized in that the processor program product comprises
- a negotiation module for exchanging negotiation messages with a further negotiation module of the further terminal, at least one negotiation message defining at least one proposal action for at least one activation/deactivation of at least one terminal capability in at least one terminal, and at least one further negotiation message defining at least one proposal reaction to the at least one proposal action.

The invention further relates to a data carrier comprising the processor program product as defined above.

Each module can be a 100% hardware module, such as a circuit, or a 100% software module, such as a program product, or a mixture of both.

Embodiments of the module according to the invention and of the method according to the invention and of the processor program product according to the invention and of the data carrier according to the invention correspond with the embodiments of the terminal according to the invention.

The invention is based upon an insight, inter alia, that it is disadvantageous to treat each terminal the same way and to ignore individual possibilities of different terminals, and is based upon a basic idea, inter alia, that negotiation messages are to be exchanged for increasing the overall flexibility.

The invention solves the problem, inter alia, to provide a terminal which is relatively flexible, and is further advantageous, inter alia, in that it offers more possibilities, compared to a prior art terminal.

These and other aspects of the invention will be apparent from and elucidated with reference to the embodiments(s) described hereinafter.
Fig. 1 shows diagrammatically terminals according to the invention comprising modules according to the invention,
Fig. 2 shows diagrammatically terminals according to the invention comprising modules according to the invention, and
Fig. 3 shows diagrammatically terminals according to the invention exchanging messages in accordance with a method according to the invention and a processor program product according to the invention.

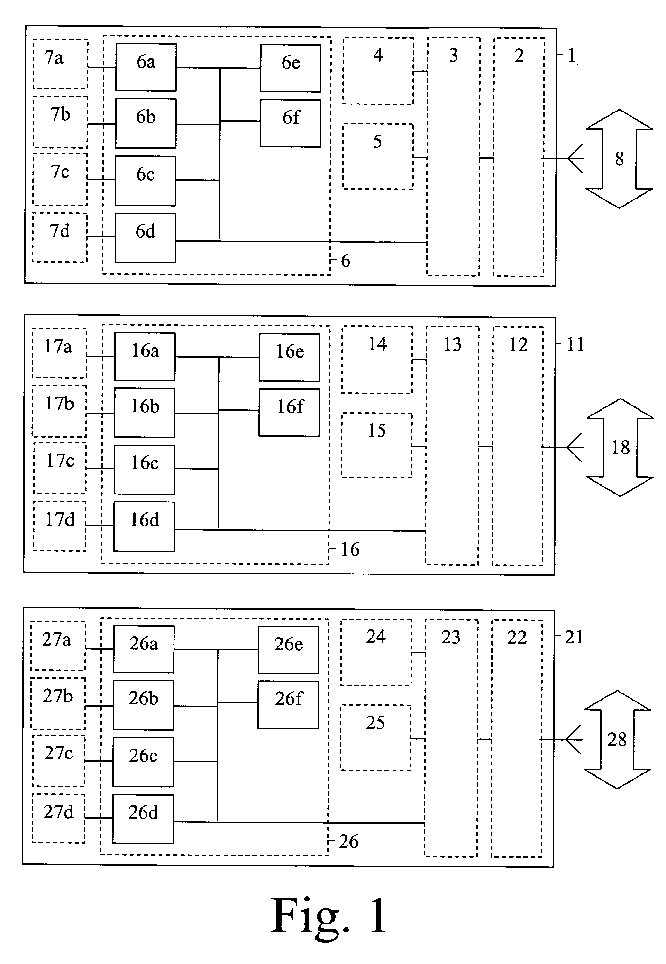

In Fig. 1, a terminal 1 according to the invention comprises a tranceiver 2 coupled to an antenna for exchanging messages 8,18,28 with a further transceiver 12 of a further terminal 11 according to the invention and/or with a yet further transceiver 22 of a yet further terminal 21 according to the invention. The transceiver 2 is coupled to a controller 3, which is further coupled to a capability module 4 and to a negotiation module 5 and to an application module 6. The application module 6 comprises four application interface modules 6a-6d for interfacing the application module 6 and four human machine interfaces 7a-7d defining terminal capabilities. The application module 6 further comprises an application rule module 6e and an application role module 6f. The respective further terminal 11 and the yet further terminal 21 comprise, similarly to the terminal 1, respective controllers 13 and 23 and respective capability modules 14 and 24 and respective negotiation modules 15 and 25 and respective application modules 16 and 26 with respective application interface modules 16a-16d and 26a-26d for interfacing the respective application modules 16 and 26 and respective human machine interfaces 17a-17d and 27a-27d. The respective application modules 16 and 26 further comprise respective application rule modules 16e and 26e and respective application role modules 16f and 26f.

The embodiment shown in Fig. 1 is a hardware embodiment, the modules 4-6,14-16,24-26 may be hardware modules such as circuits. Alternatively, these modules 4-6,14-16,24-26 may form hardware parts of the controllers 3,13,23.

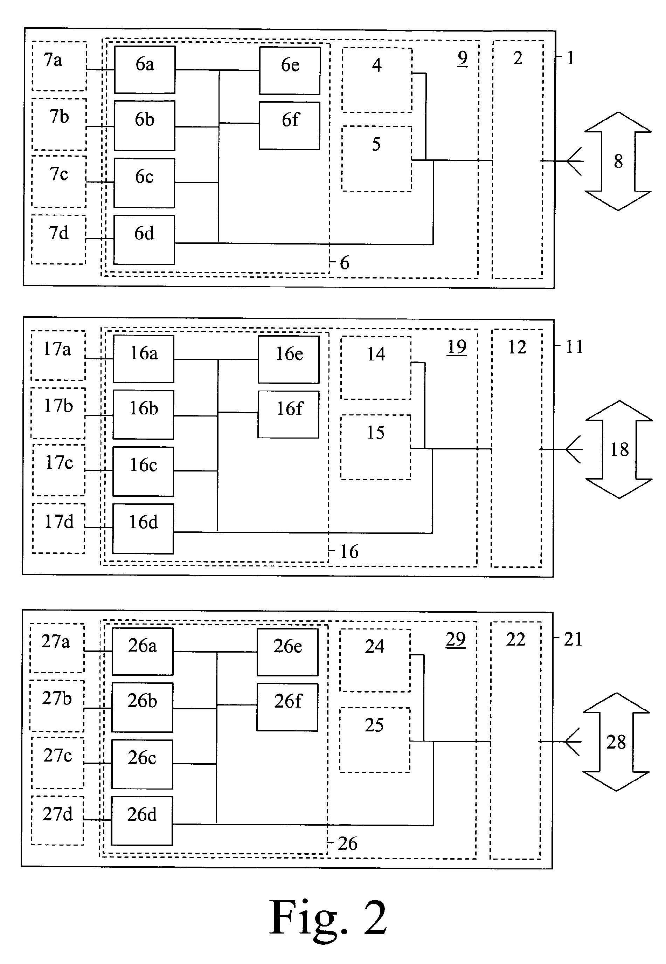

The embodiment shown in Fig. 2 is a software embodiment, the modules 4-6,14-16,24-26 may be software modules such as program products. These modules 4-6,14-16,24-26 form software parts of controllers 9,19,29 replacing the controllers 3,13,23 in Fig. 1.

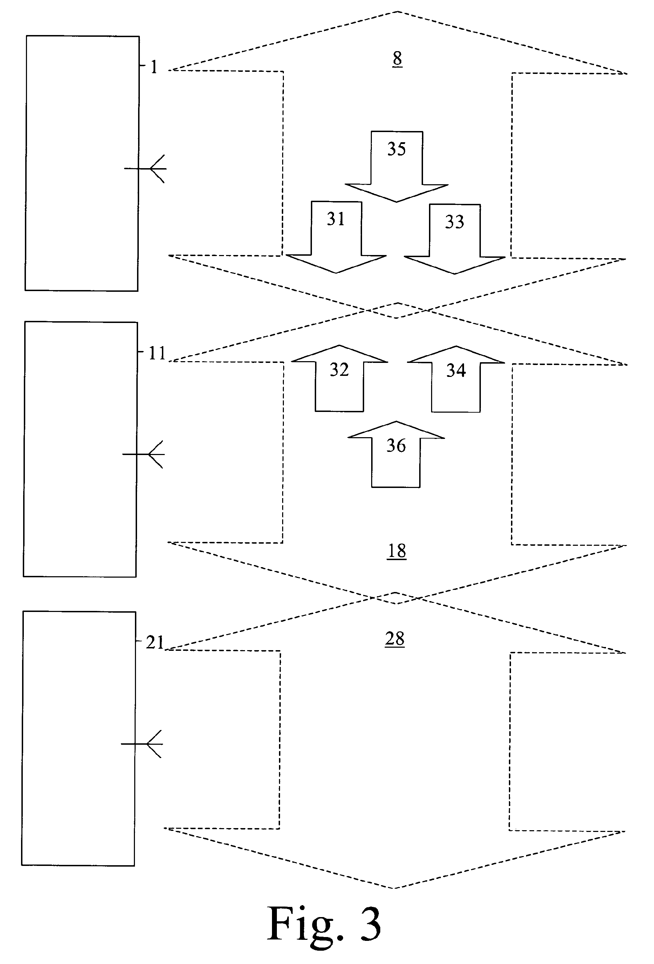

In Fig. 3, the messages 8,18 are shown in greater detail comprising capability messages 31,32 and negotiation messages 33,34 and application messages 35,36. The capability modules 4,14 exchange the capability messages 31,32 with each other via the transceivers 2,12. At least one capability message 31 defines at least one terminal capability, for example of the terminal 1, and at least one further capability message 32 defines at least one further terminal capability, for example of the further terminal 11. The negotiation modules 5,15 exchange the negotiation messages 33,34 with each other via the transceivers 2,12. At least one negotiation message 33 defines at least one proposal action for at least one activation/deactivation of at least one terminal capability in at least one terminal 1,11, and at least one further negotiation message 34 defines at least one proposal reaction to the at least one proposal action. The application interface modules 6a-6d,16a-16d are activatable and/or deactivatable, in other words (de)activatable, in response to at least one proposal reaction originating from the terminals 1,11. The application modules 6,16 exchange application messages 35,36 with each other via the transceivers 2,12. The application module 6 for example defines at least a part of an application and the further application module 16 for example defines at least a further part of the application. The application rule modules 6e,16e define rules for this application, and the application role modules 6f, 16f define roles within this application.

In a prior art situation as for example disclosed in USapp 2004/0154461, paragraph 53, a number of mobile stations together form one group of mobile stations for playing a spin-the-bottle game, which can be a useful way of selecting a member of a group. Thereto, one of the group members launches the spin-the-bottle application of his/her mobile station, and others join the application using their own mobile stations. A sound is used to illustrate a direction in which a bottleneck points. A control unit of one mobile station causes the sound to move in a specific or random order between the mobile stations, first at a fast rate, then at a gradually slowing rate until the sound is played by only one of the mobile stations.

According to the invention, the flexibility and the number of possibilities are increased by introducing the negotiation modules 5,15,25 for performing negotiations. Preferably, to increase the efficiency of these negotiations, the capability modules 4,14,24 are to be introduced too. The capability modules 4,14 exchange the capability messages 31,32 with each other via the transceivers 2,12, automatically for example after having detected each other's presence or in response to a user action. The capability message 31 for example defines the terminal 1 to comprise for example the human machine interfaces 7a-7d comprising predefined characteristics. The further capability message 32 for example defines the further terminal 11 to comprise for example the human machine interfaces 17a-17d comprising predefined characteristics. Instead of one capability message defining all terminal capabilities, a capability message may define only some of the terminal capabilities. The capability messages may be exchanged between each pair of terminals or among three or more terminals. As a result, after having exchanged these capability messages, the terminals know each other's terminal capabilities, at least as far as necessary.

Then, the negotiation modules 5,15 exchange the negotiation messages 33,34 with each other via the transceivers 2,12, automatically for example after having detected each other's terminal capabilities or in response to a user action. The negotiation message 33 for example defines one or more proposal actions for one or more activations and/or deactivations of one or more human machine interfaces 17a-17d in the terminal 11. The further negotiation message 34 defines one or more proposal reactions to the proposal actions. The application interface modules 16a-16d are activatable and/or deactivatable in response to the proposal reactions, possibly after further actions and further reactions such as confirming actions and confirming reactions. Denying actions and denying reactions may result in other negotiation messages and other further negotiation messages to be exchanged. The negotiation messages may be exchanged between each pair of terminals or among three or more terminals. As a result, after having exchanged these negotiation messages, the terminals have each activated and deactivated particular human machine interfaces.

Without the capability modules 4,14,24, the negotiation modules 5,15,25 will generally need to exchange a larger number of negotiation messages. So, in case of a relatively high negotiation speed and/or a relatively small number of negotiations to be performed, the capability modules can be avoided. In case of a relatively low negotiation speed and/or a relatively large number of negotiations to be performed, the capability modules can be introduced to accelerate the negotiations.

Then, the application modules 6,16 exchange the application messages 35,36 with each other via the transceivers 2,12, automatically for example after having detected the activations and the deactivations or in response to a user action. Alternatively, first application messages may define the application to be started, and second application messages may define application information related to the application. The application module 6 for example defines at least a part of an application and the further application module 16 for example defines at least a further part of the application. Owing to the fact that the capability modules and the negotiation modules have been introduced, it is no longer necessary to have an entire application stored in each terminal, and it is no longer necessary to have one terminal being a master and all other terminals being a slave. These are great advantages. The application rule modules 6e,16e define rules for this application, and the application role modules 6f,16f define roles within this application. Preferably, the application modules and/or the rule modules and/or the role modules communicate with and/or form part of and/or comprise the capability modules and/or the negotiation modules, to increase the efficiency of the modules. This is based on the fact that generally there will be a dependency between the application and/or one or more rules of this application and/or one or more roles within this application on the one hand and the possible terminal capabilities and negotiations on the other hand.

The messages are to be exchanged in a transparent way. By exchanging the messages in a transparent way, the messages are exchanged between the terminals via a wired or wireless link not comprising any intelligence with respect to these messages. A wired link for example comprises electrical wires or optical fibers, and a wireless link for example comprises an infrared link or a radio link such as GSM, GPRS, UMTS, BLUETOOTH, etc. Therefore, the antennas shown are just examples. The messages are to be exchanged without the terminals being masters and slaves but through negotiations, to avoid the relatively inflexible master and slave construction. The terminal for example comprises a mobile phone or a personal digital assistant or a personal computer or a lap top or a desk top or a hand held or a remote control etc.

So, the terminals according to the invention are logically and/or physically aggregated. A group of terminals transforms into a new entity that functionally surpasses the simple sum of the individual terminals. In such an aggregation, a terminal can assume a role that without the aggregation would be meaningless. In this aggregation, a terminal (function) can be used by more than one user simultaneously. This way, functionalities such as gaming (a terminal functioning as a die, pawn, mask/unmask, sound, etc.) and audio conferencing (a terminal acting as a microphone, one or two terminals acting as speakers and a terminal acting as a controller for call-setup, mute, etc.) are obtained. The application rules for example define the boundaries for the application, such as a minimum number of terminals to be involved, a maximum number of terminals to be involved, a minimum number of terminal capabilities of a terminal, the application roles and functions (speaker, microphone, die, pawn, mask/unmask, sound, display, etc.) and their inter-working, etc. The application roles for example define parts of the application, such as the part of the application to be run in the terminal and the further part of the application to be run in the further terminal etc.

The application may either be pre-provisioned, downloaded (just-in-time), on-demand provisioned, etc. Examples of the gaming functionality are games in which a sequence of visual and or auditory tokens/buttons needs to be pressed, and other memory games, goose games, turn card games, board games, poker games with dices, chess games, gambling games, card games, etc. Of course, for certain games, additional matter might be introduced, such as a board, although it is not to be excluded that such additional matter is realized through an additional terminal for example comprising a display for displaying the board and the playing terminals thereon.

Further games are not to be excluded, such as a simulated city (a virtual game whereby participants carry mobile terminals comprising roles and meet each other physically in a city, in response to which the virtual roles interact), submarine (a virtual game whereby participants carry mobile terminals comprising roles in the form of (parts of) boats and share a sea and meet each other physically somewhere, only at close range a missile may be successful), a strategy game, a silent hunting game (a virtual game whereby participants together form a crew of for example a submarine or a boat and interact with other crews, with a dead captain for example resulting in the submarine or the boat getting uncontrollable until the captain has been replaced etc.). The terminals do not need to comprise identical application interface modules but may comprise mutually different application interface modules. These application interface modules may be present all the time in activated or deactivated situation or may be present in activated situation and not present in deactivated situation. The application interface modules may be downloaded from an other terminal or from a server in response to a negotiation. This negotiation may be done based on the required human machine interfaces, available human machine interfaces (for example keypad/keyboard/mouse, display, sound, microphone, tilt/motion detection, etc.), application rules (for example saying that certain roles cannot be carried out by the same terminal such as a referee role and a player role etc.), available resources (for example memory, power, battery life, network connectivity, etc.), capabilities (for example GPS, temperature detection, compass detection, etc.), user-preferences (I have a nice color display and want to use it), participating terminals knowing each other already, multiple roles, etc.

The application module may comprise one or more application interface sub-modules per one or more application interface modules and may comprise one or more application definition sub-modules that contain information and logic required to define the application (possibly including its application interface sub-modules) and may comprise a module activation sub-module that takes care of activating and/or deactivating the application interface modules (possibly including its application interface sub-modules).

Once the (parts of the) application in the terminals have been initiated, the following steps/functions might be performed, but not necessarily in this order.

A tentative local application interface module - human machine interface mapping is made between all application interface modules of the application and the available human machine interfaces, based on the information of the application module (application definition sub-module). Any application interface module with an application interface that requires a human machine interface that is not available on this terminal is already locally deactivated by the application module (module activation sub-module). According to an example, in case the application interface modules 6a,16a,26a require a human machine interface 7a,17a,27a in the form of a microphone to be present, and in case the terminals 1 and 21 do not comprise such a human machine interface, the application interface modules 6a and 26a are to be deactivated. And in case the application interface modules 6b,16b,26b require a human machine interface 7b,17b,27b in the form of a color display to be present, and in case the terminals 11 and 21 do not comprise such a human machine interface, the application interface modules 16b and 26b are to be deactivated.

A discovery of the available application rule modules and/or application role modules in the different terminals is to be made. This might be done through exchanging capability messages. The discovery could be done by advertisement (I am terminal X and I can provide modules A, B & C) or by request/response (Req: Who can provide module D 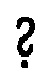 Resp: I am terminal Y and I can provide module D). This discovery might also be used for informing the other terminals which human machine interfaces in a terminal have already been deactivated.

A negotiation about which application interface modules are further to be activated and/or deactivated in which terminal and about distributions of roles and/or rules is to be made. This negotiation is performed through exchanging negotiation messages. In case, for example for a certain application, two roles may not be active via the same terminal (such as for example a referee and a participant), a possible solution could be that the negotiation module of a terminal sends a message to all other terminal that proposes to provide one or more human machine interfaces and one or more roles (I am terminal U and propose to provide role K with human machine interface F) while, independently, the other terminals send a message (I am terminal V,W and propose to provide role K with human machine interface G,H). This could then trigger a more detailed handshake during which other criteria will define the outcome (speaker quality, battery status, user preferences, ...). According to an example, in case the application interface modules 6c,16c,26c require a human machine interface 7c,17c,27c in the form of a speaker to be present, and in case the terminals 1, 11 and 21 do comprise such a human machine interface, with terminal 11 having the most powerful speaker, the application interface modules 6c and 26c are to be deactivated. Further negotiations might be required. In case the application rules define that the application interface modules must be spread as much as possible over the terminals, terminals might conclude that in one terminal an activated application interface module is to be deactivated and vice versa. This may imply further down loadings and/or deletions.

Each module can be a 100% hardware module, such as a circuit, or a 100% software module, such as a program product, or a mixture of both. Independently of being 100% hardware, 100% software or a mixture of both, each module may be combined with and/or integrated into each other module, without departing from the scope of this invention.

The expression "for" in for example "for exchanging" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.
The steps/functions of exchanging etc. do not exclude further steps/functions, like for example, inter alia, the steps/functions described for the Figures.

## Claims

1. A terminal (1) comprising a transceiver (2) for exchanging messages (8,18) with a further transceiver (12) of a further terminal (11), **characterized in that** the terminal (1) comprises
- a negotiation module (5) for exchanging negotiation messages (33,34) with a further negotiation module (15) of the further terminal (11), at least one negotiation message (33) defining at least one proposal action for at least one activation/deactivation of at least one terminal capability in at least one terminal (1,11), and at least one further negotiation message (34) defining at least one proposal reaction to the at least one proposal action.

2. The terminal (1) as defined in claim 1, **characterized in that** the terminal (1) comprises
- a capability module (4) for exchanging capability messages (31,32) with a further capability module (14) of the further terminal (11), at least one capability message (31) defining at least one terminal capability and at least one further capability message (32) defining at least one further terminal capability.

3. The terminal (1) as defined in claim 1 or 2, **characterized in that** the terminal (1) comprises
- an application module (6) for exchanging application messages (35,36) with a further application module (16) of the further terminal (11), the application module (6) defining at least a part of at least one application and the further application module (16) defining at least a further part of the at least one application.

4. The terminal (1) as defined in claim 3, **characterized in that** the application module (6) comprises
- an application interface module (6a-6d) for interfacing the application module (6) and at least one terminal capability defined by at least one human machine interface (7a-7d), the application interface module (6a-6d) being activatable/deactivatable in response to at least one proposal reaction.

5. The terminal (1) as defined in claim 3, **characterized in that** the application module (6) comprises
- an application rule module (6e) for defining at least one rule for the application.

6. The terminal (1) as defined in claim 3, **characterized in that** the application module (6) comprises
- an application role module (6f) for defining at least one role within the application.

7. The terminal (1) as defined in claim 1, 2 or 3, **characterized in that** the messages are exchanged in a transparent way.

8. The terminal (1) as defined in claim 1, 2 or 3, **characterized in that** the messages are exchanged without the terminal (1) being a master or a slave and without the further terminal (11) being a master or a slave.

9. A module for use in the terminal (1) as defined in claims 1-8.

10. A method for exchanging messages (8,18) between a transceiver (2) of a terminal (1) and a further transceiver (12) of a further terminal (11), **characterized in that** the method comprises the step of
- exchanging negotiation messages (33,34) between a negotiation module (5) and a further negotiation module (15) of the further terminal (11), at least one negotiation message (33) defining at least one proposal action for at least one activation/deactivation of at least one terminal capability in at least one terminal (1,11), and at least one further negotiation message (34) defining at least one proposal reaction to the at least one proposal action.

11. A processor program product for exchanging messages (8,18) between a transceiver (2) of a terminal (1) and a further transceiver (12) of a further terminal (11), **characterized in that** the processor program product comprises
- a negotiation module (5) for exchanging negotiation messages (33,34) with a further negotiation module (15) of the further terminal (11), at least one negotiation message (33) defining at least one proposal action for at least one activation/deactivation of at least one terminal capability in at least one terminal (1,11), and at least one further negotiation message (34) defining at least one proposal reaction to the at least one proposal action.

12. A data carrier comprising the processor program product as defined in claim 11.
